# EUROPÄISCHE PATENTSCHRIFT

(11) **EP 1 891 725 B1**
(45) Veröffentlichungstag und Bekanntmachung des Hinweises auf die Patenterteilung: **16.08.2017**
(21) Anmeldenummer: 06763572.2
(22) Anmeldetag: 08.06.2006
(51) Int. Cl.: H02K 9/20

(54) **PERMANENTMAGNETERREGTE ELEKTRISCHE MASCHINE MIT ROTORKÜHLUNG**
ELECTRIC MOTOR WITH PERMANENT MAGNET EXCITATION AND ROTOR COOLING
MOTEUR ELECTRIQUE A EXCITATION PAR AIMANTS PERMANENTS, A REFROIDISSEMENT DU ROTOR

(30) Priorität: 16.06.2005 DE 102005027953
(43) Veröffentlichungstag der Anmeldung: 27.02.2008
(73) Patentinhaber: Siemens Aktiengesellschaft, 80333 München (DE)
(72) Erfinder: JÖCKEL, Andreas, 90408 Nürnberg (DE)
(86) Internationale Anmeldenummer: PCT/EP2006/062989
(87) Internationale Veröffentlichungsnummer: WO 2006/134057

(56) Entgegenhaltungen:
- DE-A1- 2 251 841
- DE-A1- 10 019 914
- DE-A1- 10 304 276
- GB-A- 1 283 332
- US-A- 4 574 210
- PATENT ABSTRACTS OF JAPAN Bd. 007, Nr. 013 (E-153), 19. Januar 1983 (1983-01-19) -& JP 57 170042 A (HITACHI SEISAKUSHO KK), 20. Oktober 1982 (1982-10-20)

## Beschreibung

Die Erfindung betrifft einen elektrischen Antrieb mit einem Stator, einem Rotor, der auf einer Hohlwelle positionierte Permanentmagnete aufweist.

Bei permanentmagneterregten elektrischen Maschinen treten Verluste hauptsächlich im Stator auf. Die vergleichsweise zwar geringeren vorhandenen Wärmeverluste des Rotors müssen dennoch abgeführt werden. Besonders gravierend ist das Problem der Rotorerwärmung bei axial vergleichsweise sehr langen elektrischen Maschinen, bei denen die Wegstrecken von der Mitte des Rotors bis nach außen an die Stirnseiten des Rotors vergleichsweise lang sind.

Durch die Wärme im Rotor reduziert sich der magnetische Fluss, was u.a. zu einer Verschlechterung des Wirkungsgrads der elektrischen Maschine führt.

Es ist bekannt, die Verluste des Rotors über die tragende Hohlwelle oder über den Luftspalt zum Stator hin abzuführen oder durch eine entsprechende dementsprechend kostenintensive Wahl des Magnetmaterials zu beherrschen, um dadurch die Flussreduktion zu vermindern.

Eine weitere Möglichkeit die Wärme aus dem Rotor abzuführen wird durch eine aufwendige Fremdbelüftung im Rotor erreicht.

Eine weitere kostenintensive Möglichkeit die Wärme aus dem Rotor abzuführen, besteht darin, über im Rotor befindliche Heatpipes einen axialen Wärmefluss zu Wärmesenken zu schaffen.

Permanentmagneterregter elektrischer Antrieb mit einem Stator, einem Rotor, der eine Hohlwelle aufweist, auf der Permanentmagnete positioniert sind, wobei die Hohlwelle zumindest auf ihren Stirnseiten gegenüber einer Abtriebswelle druckdicht abgeschlossen ist, und wobei sich in dem eingeschlossenen Hohlraum ein geeignetes Kühlmedium befindet, das im Betrieb dieser elektrischen Maschine an der vergleichsweise heißen Hohlwelle im Bereich der Permanentmagnete verdampft und im Bereich der vergleichsweise kälteren Abtriebswelle kondensiert, so dass sich ein radialer und axialer Wärmetransport einstellt, wobei die Abtriebswelle Mittel aufweist, die zur Kondensation des Kühlmittels führen.

Ausgehend davon, liegt der Erfindung die Aufgabe zugrunde, einen permanentmagneterregten elektrischen Antrieb zu schaffen, die auch eine effiziente Kühlung des Rotors vorsieht, wobei die Kühlung des Rotors einen vergleichsweise geringen konstruktiven Aufwand erfordert.

Die Lösung der gestellten Aufgabe gelingt durch einen permanentmagneterregten elektrischen Antrieb mit einem Stator, einem Rotor, der eine Hohlwelle aufweist, auf der Permanentmagnete positioniert sind, wobei die Hohlwelle zumindest auf ihren Stirnseiten gegenüber einer Abtriebswelle druckdicht abgeschlossen ist, und wobei sich in dem eingeschlossenen Hohlraum ein geeignetes Kühlmedium befindet, das im Betrieb dieser elektrischen Maschine an der vergleichsweise heißen Hohlwelle im Bereich der Permanentmagnete verdampft und im Bereich der vergleichsweise kälteren Abtriebswelle kondensiert, so dass sich ein radialer und axialer Wärmetransport einstellt, wobei die Abtriebswelle Mittel aufweist, die zur Kondensation des Kühlmittels führen, derart, dass die Abtriebswelle als Radsatzwelle eines Triebfahrzeugs ausgebildet ist, wobei an den Enden der Radsatzwelle aufgeschrumpfte Triebräder vorhanden sind, die als Kühlfläche dienen.

Zusätzlich stellt sich aufgrund des axialen Temperaturgefälles in der Abtriebswelle auch ein axialer Wärmetransport durch das Kühlmedium ein.

Dabei wird nunmehr die Verlustwärme des Rotors effektiv aus dem Rotor auf die Radsatzwellen übertragen. Der Rotor weist ein Blechpaket auf, auf dem sich Permanentmagnete in tangentialer Anordnung oder in Flusskonzentrationsanordnung befinden. Vorteilhafterweise sind diese Permanentmagnete durch eine Bandage insbesondere aus Glasfasern am Rotor fixiert. Die Permanentmagnete können sich alternativ auch in achsparallelen Ausnehmungen des Blechpakets befinden. Das Blechpaket ist auf eine Hohlwelle aufgeschrumpft, die einen ausreichenden Wärmetransport in radialer Richtung gestattet. Entscheidend ist dass die Hohlwelle an der Stirnseite und gegenüber der Abtriebswelle druckdicht verschlossen ist.

Der normalerweise mit Luft gefüllte Hohlraum zwischen der Hohlwelle und der Abtriebswelle wird durch ein etwa bei 60°-80°C siedendes Kühlmedium vorzugsweise Ethyl-Alkohol versetzt, das dann an der heißen Hohlwelle verdampft und an der dementsprechend kühleren Abtriebswelle wieder kondensiert. Dadurch wird die Wärme sehr effektiv von außen nach innen, also radial auf die Abtriebswelle übertragen. In der Abtriebswelle kann sie nun leicht nach außen, z.B. an große Treibräder, Antriebsräder, Propeller, abgeleitet werden. Damit wird ein äußerst effizienter Wärmetransport mit vergleichsweise geringem konstruktivem Aufwand für eine permanentmagneterregte elektrische Maschine geschaffen.

Die erfindungsgemäße Lösung weist außerdem folgende Vorteile auf:
Der Rotor der permanentmagneterregten elektrischen Maschine bleibt gegenüber vergleichsweisen Rotoren wesentlich kühler, dadurch stellt sich ein höherer Magnetfluss und somit ein vergleichsweise verbesserter Wirkungsgrad dieser elektrischen Maschine ein.

Des Weiteren ist die Entmagnetisierungsfestigkeit der Permanentmagnete höher. Bei Radsatzwellen und deren Antriebsrädern bei elektrischen Triebfahrzeugen stellt sich eine homogene Erwärmung von Hohlwelle und Radsatzwelle ein.

Vorhandener Sauerstoff und Restfeuchte im Zwischenraum von Hohlwelle und Abtriebswelle kann durch das Kühlmedium gebunden werden, damit wird eventuelle Reibkorrosionen in den beiden Schrumpfverbänden stark vermindert.

Die Einbringung des Kühlmediums in den Hohlraum gelingt dadurch, dass beispielsweise auf einer Stirnseite der Hohlwelle eine Bohrung vorhanden ist, durch die das Kühlmedium eingebracht werden kann. Vorteilhafterweise erfolgt diese Füllung nach der Montage der Hohlwelle auf der Abtriebswelle. Diese Bohrung wird anschließend druckdicht verschlossen, z.B. mit einem Gewindestopfen, und versiegelt.

Außer im Schadensfall wird normalerweise im Betrieb dieser elektrischen Maschine die Verbindung zwischen Hohlwelle und Abtriebswelle nicht gelöst, so dass das Medium aus diesem Hohlraum nie wieder entfernt werden muss.

Die Erfindung sowie weitere vorteilhafte Ausgestaltungen der Erfindung gemäß Merkmalen der Unteransprüche werden im Folgenden anhand schematisch dargestellter Ausführungsbeispiele in der Zeichnung näher erläutert; darin zeigen:
- FIG 1,2: Längsschnitte durch elektrische Maschinen,
- FIG 3 bis 5: Querschnitte der elektrischen Maschinen im Bereich der Abtriebswelle,

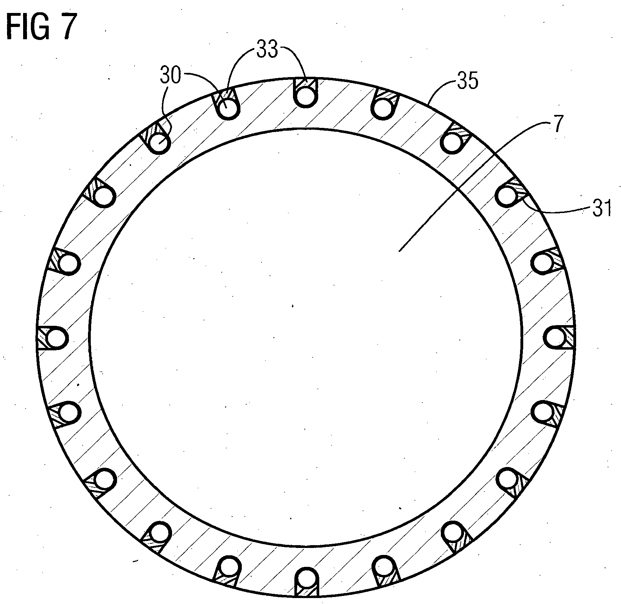

- FIG 7: eine Hülse.

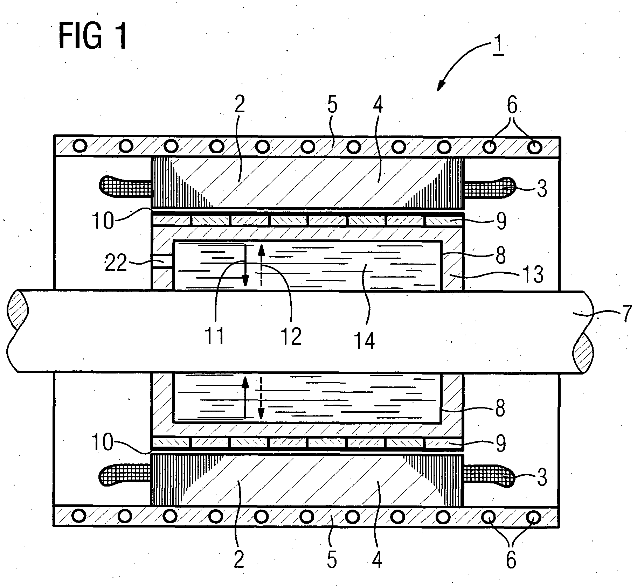

FIG 1 zeigt einen Längsschnitt durch einen Direktantrieb, der als permanentmagneterregte Synchronmaschine 1 ausgelegt ist. Diese schematisch dargestellte permanentmagneterregte Synchronmaschine 1 weist einen Stator 2 auf, der aus geschichteten Blechen 4 aufgebaut ist. In den nicht näher dargestellten Nuten des Stators 2 befinden sich Wicklungen, die an den Stirnseiten des Stators 2 Wickelköpfe 3 bilden. Die durch die Wicklungen in den paketierten Blechen 4 im Betrieb der elektrischen Synchronmaschine 1 hervorgerufene Wärme, wird zu einem großen Teil mittels eines Kühlmantels 5 durch ein in den beispielhaft dargestellten Kühlkanälen 6 befindliches Kühlmedium wie Luft oder eine Flüssigkeit abgeführt. Die Kühlkanäle 6 sind dabei mäander- oder wendelförmig um den Stator 2 geführt.

Der Rotor 8 weist eine Hohlwelle 13 auf, die auf eine Abtriebswelle 7 geschrumpft ist. Der Rotor 8 weist zum Luftspalt der permanentmagneterregten Synchronmaschine 1 Permanentmagnet 9 auf, die durch eine Bandage 10 in Umfangsrichtung gehalten werden. Die Erfindung beschränkt sich nicht nur auf Oberflächenmagnete, sie kann auch auf innenliegende Permanentmagnete angewendet werden, die sich in im wesentlichen axial verlaufenden Taschen der Hohlwelle 13 befinden.
Im Betrieb der permanentmagneterregten Synchronmaschine 1 treten nunmehr u.a. Verluste im Rotor 8 auf, die abgeführt werden müssen, um einen möglichst hohen Wirkungsgrad der elektrischen Synchronmaschine 1 zu erhalten. Durch den Hohlraum 14 der Hohlwelle 13 transportiert nun ein Kühlmedium die Wärme von der Seite der Permanentmagnete 9 zur Abtriebswelle 7. Dort kondensiert das Kühlmedium und es erfolgt ein Rücktransport auf die Seite der Permanentmagnete 9. Dieser im Wesentlichen radiale thermische Kreislauf ist durch Pfeile 11 und 12 angedeutet. Der Rücktransport des Kondensats kann durch Zentrifugalkraft erfolgen, aber auch, und dies ist insbesondere für langsamdrehende Maschinen von Vorteil, durch Schwerkraft ("Heruntertropfen").

Die Abtriebswelle 7 leitet nunmehr die Wärme aufgrund ihrer guten Wärmeleitfähigkeit an nicht näher dargestellte Räder, Propeller etc., die mit der Abtriebswelle 7 mechanisch starr und wärmeleitend verbunden sind und wo eine endgültige großflächige Wärmeabgabe an die Umgebung erfolgt. Eine vergleichsweise geringere Wärmeabgabe erfolgt selbstverständlich auch von der Abtriebswelle 7 selbst an die Umgebung.

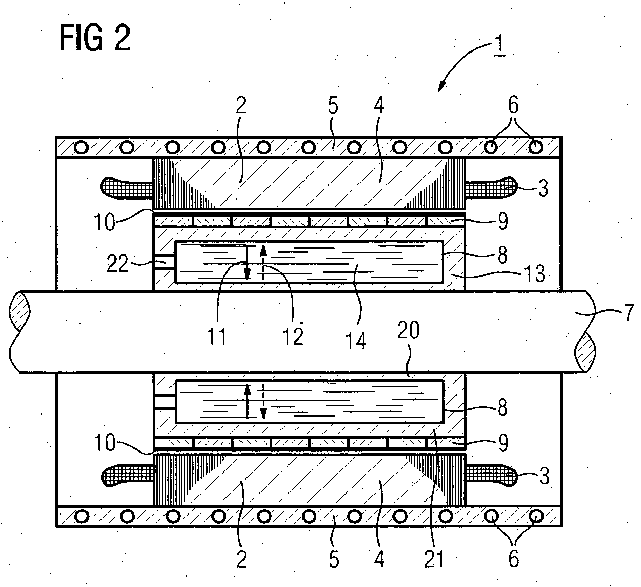

FIG 2 zeigt eine Abwandlung der Ausführungsform nach FIG 1. Dabei ist die Hohlwelle 13 als doppelwandiger Zylinder ausgeführt, der mit seinem Innenzylinder 20 auf die Abtriebswelle 7 aufgeschrumpft und mit seinem Außenzylinder 21 mit dem Blechpaket des Rotors 8 oder direkt den Permanentmagneten 9 verbunden ist.

Nach der Montage der Hohlwelle 13 auf die Abtriebswelle 7, wird über eine Bohrung 22 das Kühlmedium in den Hohlraum 14 eingebracht und anschließend druckdicht verschlossen.

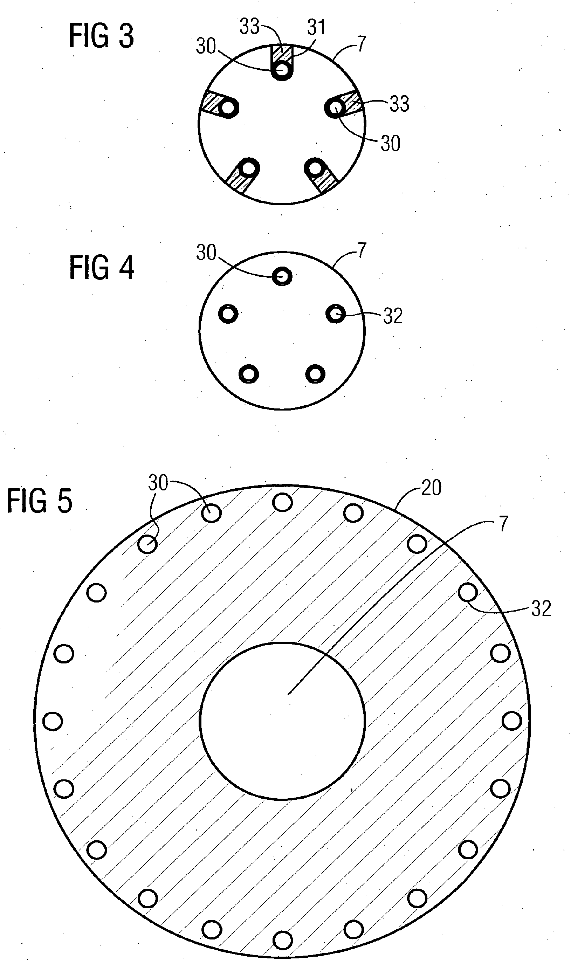

FIG 3 und 4 zeigen in einem Querschnitt durch die Abtriebswelle 7 der Ausführungsform nach FIG 1 eine zusätzliche Möglichkeit die Wärmeleitfähigkeit der Abtriebswelle 7 zu verbessern. Dabei werden in achsparallelen Ausnehmungen 31 bzw. axial verlaufenden Bohrungen 32 Heatpipes 30 eingesetzt, die ggf. durch wärmeleitfähige Materialien 33 thermisch an das Kühlmedium und/oder die Abtriebswelle gekoppelt sind. Die Bohrungen 32 kann auch zentrisch in der Abtriebswelle 7 angeordnet sein.

Die Kondensatorzone der Heatpipes 30 liegt außerhalb des Motorraums.

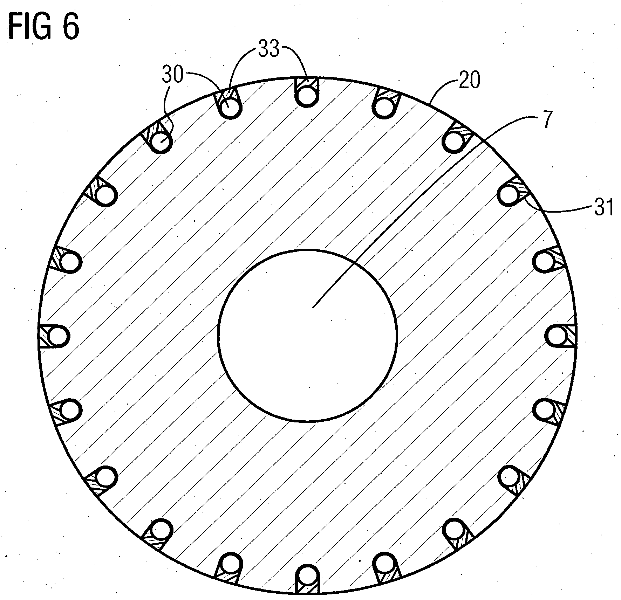

FIG 5 und 6 zeigen in einem Querschnitt durch die Abtriebswelle 7 der Ausführungsform nach FIG 2 eine zusätzliche Möglichkeit die Wärmeleitfähigkeit der Abtriebswelle 7 zu verbessern.

Dabei befinden sich im Innenzylinder 20 in axial verlaufenden Ausnehmungen 31 und/oder Bohrungen 32 Heatpipes 30, die über wärmeleitfähige Materialien an die Abtriebswelle 7 und/oder den Innenzylinder 20 und/oder den Hohlraum 14 thermisch gekoppelt sind.

Diese Heatpipes 30 können sich auch in einer zusätzlichen Hülse 35 befinden, die zwischen Abtriebswelle 7 und Hohlraum 14 angeordnet ist. Vorteilhafterweise muss dabei die Abtriebswelle 7 nicht konstruktiv verändert werden. Die Kondensatorzonen der Heatpipes 30 liegen in dieser Ausführungsform ebenfalls außerhalb des Motorraums.

Die Ausnehmungen der Hülse 35 selbst, sind, auch wenn keine Heatpipes 30 eingesetzt werden, am Wärmeabtransport beteiligt, beispielsweise über ein dort vorhandenes oder durchströmendes Kühlmedium sei es Wasser oder Luft. Eine Luftströmung wird durch Fremd- oder Eigenbelüftung erzeugt, während die Strömung des Wassers durch Pumpen erreicht wird.

Ein derartiger Aufbau eines Antriebs durch eine permanentmagneterregte elektrische Maschine eignet sich für elektrische Triebfahrzeuge, da das die elektrische Maschine umgebende Medium aufgrund der Bewegung des Triebfahrzeugs eine ideale Wärmesenke darstellt. Bei Triebfahrzeugen bildet die mechanische thermisch gut leitfähige Verbindung von Abtriebswelle 7 und Triebrädern eine optimale Wärmesenke.

Die Antriebsanordnung schafft also Verlustwärme, die im Rotor 8 ist über den Hohlraum 14 der Hohlwelle 13 auf die Abtriebswelle 7, die die Wärme über im Wesentlichen axialen Wärmetransport an Kühlflächen abgibt. Dabei werden Antriebsaufgaben und Wärmetransport durch die Abtriebswelle 7 übernommen.

## Patentansprüche

1. Permanentmagneterregter elektrischer Antrieb (1) mit einem Stator (2), einem Rotor (8), der eine Hohlwelle (13) aufweist, auf der Permanentmagnete (9) positioniert sind, wobei die Hohlwelle (13) zumindest auf ihren Stirnseiten gegenüber einer Abtriebswelle (7) druckdicht abgeschlossen ist, und wobei sich in dem eingeschlossenen Hohlraum (14) ein geeignetes Kühlmedium befindet, das im Betrieb dieser elektrischen Maschine an der vergleichsweise heißen Hohlwelle (13) im Bereich der Permanentmagnete (9) verdampft und im Bereich der vergleichsweise kälteren Abtriebswelle (7) kondensiert, so dass sich ein radialer und axialer Wärmetransport einstellt, wobei die Abtriebswelle (7) Mittel aufweist, die zur Kondensation des Kühlmittels führen, derart, dass die Abtriebswelle (7) als Radsatzwelle eines Triebfahrzeugs ausgebildet ist, wobei an den Enden der Radsatzwelle aufgeschrumpfte Triebräder vorhanden sind, die als Kühlfläche dienen.

2. Permanentmagneterregter elektrischer Antrieb (1) nach Anspruch 1, **dadurch gekennzeichnet, dass** der Stator (2) wassergekühlt ist.

3. Permanentmagneterregter elektrischer Antrieb (1) nach Anspruch 2, **dadurch gekennzeichnet, dass** der Stator (2) einen Wasserkühlmantel (5) aufweist.

4. Permanentmagneterregter elektrischer Antrieb (1) nach Anspruch 2, **dadurch gekennzeichnet, dass** der Stator (2) Kühlkanäle (6) im und/oder am Blechpaket (4) aufweist.

5. Permanentmagneterregter elektrischer Antrieb (1) nach einem der vorhergehenden Ansprüche, **dadurch gekennzeichnet, dass** als Kühlmedium ein Ethylalkohol eingesetzt ist.

6. Permanentmagneterregter elektrischer Antrieb (1) nach Anspruch 1, **dadurch gekennzeichnet, dass** die Abtriebswelle (7) und/oder die Hohlwelle (13) und/oder eine Hülse (35) zusätzlich axial verlaufende Heatpipes (30) aufweist.

## Claims

1. Electric drive (1) with permanent magnet excitation having a stator (2) and a rotor (8) which has a hollow shaft (13) on which permanent magnets (9) are positioned, the hollow shaft (13) being closed off in a pressure-tight manner with respect to an output drive shaft (7) at least on its end faces, and a suitable cooling medium being situated in the enclosed cavity (14), said cooling medium evaporating on the comparatively hot hollow shaft (13) in the region of the permanent magnets (9) and condensing in the region of the comparatively colder output drive shaft (7) during operation of this electric motor, with the result that radial and axial heat transport is established, the output drive shaft (7) having means which result in condensation of the cooling means in such a manner that the output drive shaft (7) is in the form of a wheelset shaft of a locomotive vehicle, driven wheels which have been shrunk on and are used as the cooling area being provided at the ends of the wheelset shaft.

2. Electric drive (1) with permanent magnet excitation according to Claim 1, **characterized in that** the stator (2) is water-cooled.

3. Electric drive (1) with permanent magnet excitation according to Claim 2, **characterized in that** the stator (2) has a water cooling jacket (5).

4. Electric drive (1) with permanent magnet excitation according to Claim 2, **characterized in that** the stator (2) has cooling channels (6) in and/or on the laminated core (4).

5. Electric drive (1) with permanent magnet excitation according to one of the preceding claims, **characterized in that** an ethyl alcohol is used as the cooling medium.

6. Electric drive (1) with permanent magnet excitation according to Claim 1, **characterized in that** the output drive shaft (7) and/or the hollow shaft (13) and/or a sleeve (35) additionally has/have axially running heat pipes (30).

## Revendications

1. Entraînement (1) électrique à excitation par aimants permanents, comprenant un stator (2), un rotor (8), qui a un arbre (13) creux, sur lequel sont placés des aimants (9) permanents, l'arbre (13) creux étant fermé, d'une manière étanche à la pression, au moins sur ses côtés frontaux par rapport à un arbre (7) de sortie et dans lequel, dans l'espace (14) creux fermé se trouve un fluide de refroidissement approprié, qui, lorsque cette machine électrique fonctionne, s'évapore sur l'arbre (13) creux relativement chaud, dans la région des aimants (9) permanents et se condense dans la région de l'arbre (7) de sortie relativement plus froid, de manière à établir une propagation de la chaleur radiale et axiale, l'arbre (7) de sortie ayant des moyens, qui provoquent la condensation du fluide de refroidissement, de manière à ce que l'arbre (7) de sortie soit constitué sous la forme d'un corps d'essieu d'un véhicule de traction, des roues motrices, qui servent de surface de refroidissement, étant rétreintes aux extrémités du corps d'essieu.

2. Entraînement (1) électrique à excitation par aimants permanents suivant la revendication 1, **caractérisé en ce que** le stator (2) est refroidi par de l'eau.

3. Entraînement (1) électrique à excitation par aimants permanents suivant la revendication 2, **caractérisé en ce que** le stator (2) a une chemise (5) de refroidissement par de l'eau.

4. Entraînement (1) électrique à excitation par aimants permanents suivant la revendication 2, **caractérisé en ce que** le stator (2) a des conduits (6) de refroidissement dans et/ou sur le paquet (4) de tôles.

5. Entraînement (1) électrique à excitation par aimants permanents suivant l'une des revendications précédentes, **caractérisé en ce qu'**il est utilisé un alcool éthylique comme fluide de refroidissement.

6. Entraînement (1) électrique à excitation par aimants permanents suivant la revendication 1, **caractérisé en ce que** l'arbre (7) de sortie et/ou l'arbre (13) creux et/ou un manchon (35) a en outre des caloducs (30) s'étendant axialement.
